# EUROPÄISCHE PATENTSCHRIFT

(11) **EP 1 518 430 B1**
(45) Veröffentlichungstag und Bekanntmachung des Hinweises auf die Patenterteilung: **15.08.2012**
(21) Anmeldenummer: 03762443.4
(22) Anmeldetag: 27.06.2003
(51) Int. Cl.: G06F 13/40

(54) **FUNKMODUL**
RADIO MODULE
MODULE RADIO

(30) Priorität: 03.07.2002 DE 10230619
(43) Veröffentlichungstag der Anmeldung: 30.03.2005
(73) Patentinhaber: Cinterion Wireless Modules GmbH, 81669 München (DE)
(72) Erfinder: BAHR, Michael, 12101 Berlin (DE); BARAN, Marian, 12167 Berlin (DE); ROMAHN, Jörg, 12353 Berlin (DE); SCHWALBACH, Peter, 10997 Berlin (DE)
(74) Vertreter: Eisenführ, Speiser & Partner
(86) Internationale Anmeldenummer: PCT/DE2003/002213
(87) Internationale Veröffentlichungsnummer: WO 2004/006600

(56) Entgegenhaltungen:
- EP-A- 0 670 638
- US-B1- 6 397 269

## Beschreibung

Die Erfindung bezieht sich auf ein Funkmoduls mit einer Funkeinrichtung, einer mit der Funkeinrichtung in Verbindung stehenden internen Mikroprozessoreinrichtung und einem mit der Mikroprozessoreinrichtung in Verbindung stehenden Interface mit Anschlusspins zum Anschluss des Funkmoduls an mindestens eine externe elektrische Vorrichtung, wobei das Funkmodul derart ausgestaltet ist, dass es mindestens zwei Betriebsarten aufweiset, in der es betrieben werden kann, und zwar eine passive Betriebsart, bei der eine externe Mikroprozessoreinrichtung als externe elektrische Vorrichtung an das Funkmodul angeschlossen ist, das Funkmodul als Modem für die externe Mikroprozessoreinrichtung dient und das Funkmodul über Modem- Ansteuersignale, vorzugsweise AT-Kommandos, von der externen Mikroprozessoreinrichtung ansteuerbar ist, und mindestens eine aktive Betriebsart, bei der mindestens ein Aktor oder Sensor als externe elektrische Vorrichtung an das Funkmodul angeschlossen ist, das Funkmodul den mindestens einen Aktor oder Sensor ansteuert und/oder ausliest und seinerseits über die Funkeinrichtung von externer Seite ansteuerbar ist.

Ein derartiges Funkmodul wird von der Firma Wavecom unter dem Produktnamen Wismo-Pac vertrieben. Dieses vorbekannte Funkmodul kann in zwei Betriebsarten betrieben werden, und zwar einer ersten Betriebsart, bei der das Funkmodul als Modem arbeitet und in einer zweiten Betriebsart, bei der das Modern in einem Telekommunikationsendgerätbeispielsweise einem Handy - eingesetzt ist und dort alle Steuerfunktionen übernimmt.

Das vorbekannte Funkmodul weist ein Interface mit 222 Anschlusspins auf, von denen eine erste Gruppe von Anschlusspins eine serielle Schnittstelle, nämlich eine RS-232 Schnittstelle, für den Modembetrieb per AT-Kommandos bilden.

Alle übrigen Anschlusspins bilden eine zweite Gruppe von Anschlusspins, die für alle übrigen Aufgeben des vorbekannten Moduls zuständig sind, beispielsweise für den Anschluss von Mikrofonen, Lautspre^{c}ₕern, SIM-Karten oder anderen Komponenten.

Aus dem Dokument US-B1-6 397 269 ist eine PC-Karte bekannt, in der einzelne "Connector Pins" derart geschaltet werden können, dass diese Pins entweder zum Transfer von Audiodaten zwischen der PC-Karte und einem externen Computer dienen oder, falles die PC-Karte als Modem eingesetzt wird, diese Pins zum Datentransfer mit einem Speicher der PC-Karte dienen. Bei beiden Betriebsarten werden die "Connector Pins" als Schnittstelle zwischen der PC-Karte und dem Computer verwendet.

Der Erfindung liegt die Aufgabe zugrunde, ein Funkmodul anzugeben, dass mit möglichst wenig Anschlusspins auskommt.

Diese Aufgabe wird ausgehend von einem Funkmodul der oben an- gegebenen Art erfindungsgemäß dadurch gelost, dass die elektrische Bewegung der Anschlusspins derart umkonfigurierbar ausgestaltet ist, dass die Mikroprozessoreinrichtung mindestens ein Manschlusspins sowohl für die passive Betriebsart und als auch für mindestens eine der aktiven Betriebsarten benutzt.

Ein wesentlicher Vorteil des erfindungsgemäßen Funkmoduls besteht darin, dass es besonders kostengünstig hergestellt wer- den kann; denn bei dem erfindungsgemäßen Funkmodul sind deutlich weniger Anschlusspins für das Interface erforderlich als bei den bisher bekannten Funkmodulen, wodurch Material-und Hersteltungskosten reduziert werden. Dies wird bei dem erfindungsgemäßen Funkmodul konkret dadurch erreicht, dass die Anschlusspins des Interfaces nicht ausschließlich für jeweils eine Betriebsart des Funkmoduls zur Verfügung stehen, sondern - zumindest ieiiweise-vori zwei oder mehreren Betriebsarten walweise genutzt werden können. Die Erfindung macht sich da- bei die Erkenntnis zunutze, dass das erfindungsgemäße Funkmodul zu jedem Zeitpunkt stets ausschließlich in einer einzigen Betriebsart betrieben wird; somit kann durch eine entsprechende Ansteuerung bzw. ein entsprechendes Auslesen der Anschlusspins des Interfaces stets dafür gesorgt werden, dass jede Betriebsart des Funkmoduls die für sie erforderliche Anzahl an Anschlusspins und die erforderliche Belegung der Anschlusspins zur Verfügung hat.

Gemäß einer Weiterbildung des erfindungsgemäßen Funkmoduls wird es als vorteilhaft angesehen, wenn die Mikroprozessoreinrichtung mit mindestens zwei Softwareprogrammen programmiert ist, von denen ein Softwareprogramm das Betriebssystem des Funkmoduls bildet, das die elektrische Belegung der Anschlusspins für jede der mindestens zwei Betriebsarten des Funkmoduls festlegt, und mindestens ein weiteres Softwareprogramm Applikationssoftware - also Software, die vom Benutzer des Funkmoduls festgelegt wird - bildet, die die jeweilige Betriebsart des Funkmoduls festlegt. Durch die Aufsplittung der Mikroprozessor-Software in mindestens zwei getrennte Softwareprogramme wird erreicht, dass die von dem Benutzer des Funkmoduls generierte Applikationssoftware von dem eigentlichen Betriebssystem des Funkmoduls programmtechnisch getrennt wird. Die elektrische Belegung der Anschlusspins kann somit durch die Applikationssoftware des Benutzers des Funkmoduls nicht unabsichtlich verändert werden.

Im Übrigen wird es als vorteilhaft angesehen, wenn ein Umprogrammieren der Anschlusspins bzw. ein Verändern der Belegung der Anschlusspins durch den Benutzer des Funkmoduls ausgeschlossen ist; dies lässt sich erreichen, wenn ausschließlich die Applikationssoftware benutzerseitig von außen veränderbar ist, wohingegen das Betriebssystem benutzerseitig unveränderbar ist.

Besonders einfach und damit vorteilhaft lässt sich erreichen, dass der Benutzer das Betriebssystem nicht verändern kann, indem das Betriebssystem durch Firmware gebildet wird.

Einfach und damit vorteilhaft lässt sich das erfindungsgemäße Funkmodul benutzerseitig programmieren, wenn die Applikationssoftware Interpreter-Software ist, die vorzugsweise auf einer der beiden Programmiersprachen Basic oder Java^{®} basiert. "Java^{®}" ist eine eingetragene Marke der Sun Microsystems, Inc., Palo Alto, USA.

In vielen Ländern sind behördliche Zulassungen erforderlich, bevor Funkeinrichtungen betrieben werden dürfen. Um sicherzustellen, dass eine für das erfindungsgemäße Funkmodul erhaltene behördliche Zulassung nicht dadurch gefährdet wird, dass durch die Applikationssoftware des Benutzers die elektrischen Eigenschaften des Funkmoduls derart verändert werden, dass das Funkmodul nicht mehr unter die behördliche Zulassung fällt, wird es als vorteilhaft angesehen, wenn die Applikationssoftware und das Betriebssystem derart voneinander getrennt sind, dass die Ansteuerung der Funkeinrichtung und des Interfaces ausschließlich durch das Betriebssystem erfolgen kann und ein Zugriff der Applikationssoftware auf das Interface und die Funkeinrichtung ausschließlich unter Vermittlung und Kontrolle des Betriebssystems erfolgen kann und ein unmittelbarer Zugriff der Applikationssoftware auf das Interface und die Funkeinrichtung unterbunden ist. Mit anderen Worten wird bei dieser Ausgestaltung des Funkmoduls also verhindert, dass das Betriebssystem des Funkmoduls vom Benutzer durch seine Applikationssoftware verändert werden kann; Zulassungsprobleme aufgrund der Applikationssoftware des Kunden werden also zuverlässig vermieden. Konkret legt nämlich ausschließlich das fest vorprogrammierte Betriebssystem des Funkmoduls die Konfiguration des Interfaces und die Anschlussbelegung der Anschlusspins fest; durch die Applikationssoftware des Benutzers wird dann lediglich noch jeweils eine der durch das Betriebssystem fest vorgegebenen Konfigurationen ausgewählt; ein unmittelbarer Zugriff durch die Applikationssoftware auf die Konfiguration des Funkmoduls und auf die Funkeinrichtung des Funkmoduls ist ausgeschlossen.

Da bei der passiven Betriebsart, also der Modembetriebsart, Applikationssoftware des Benutzers nicht notwendig ist, wird es als vorteilhaft angesehen, wenn die passive Betriebsart des Funkmoduls vollständig in dem Betriebssystem des Funkmoduls hinterlegt ist.

Zur Erläuterung der Erfindung zeigt
Figur 1 ein Ausführungsbeispiel für ein erfindungsgemäßes Funkmodul, das in der passiven Betriebsart betrieben wird,
Figur 2 das Funkmodul gemäß der Figur 1 in einer aktiven Betriebsart,
Figur 3 die Auftrennung der Mikroprozessor-Software in Betriebssystem-Software und in Applikationssoftware in schematischer Darstellung und
Figur 4 eine Tabelle mit einem Ausführungsbeispiel für eine Belegung der Anschlusspins bei einem Interface mit 19 Anschlusspins.

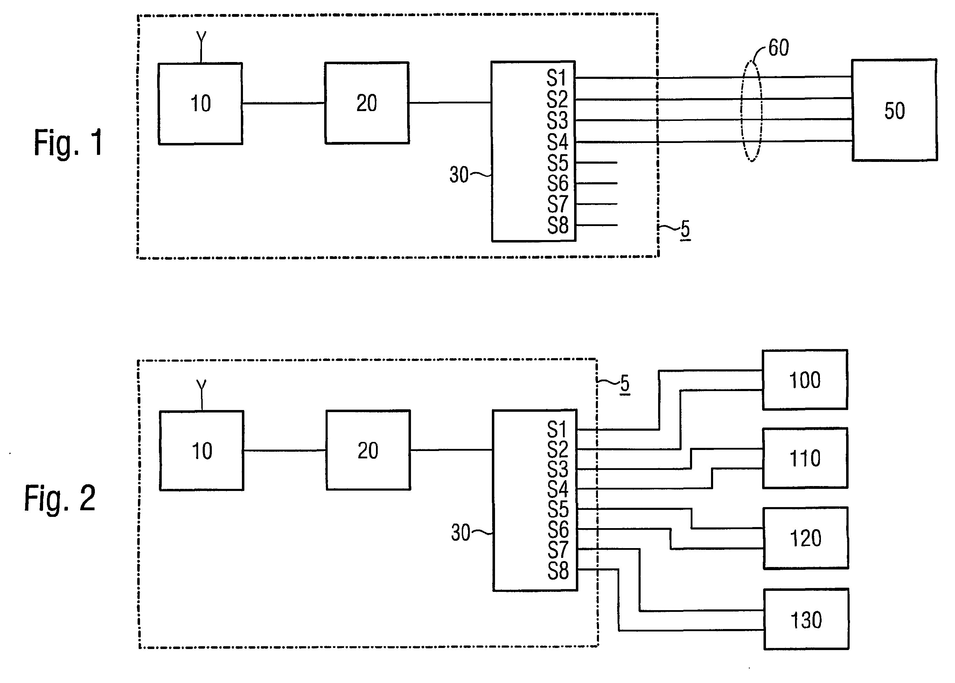

Die Figur 1 zeigt ein Funkmodul 5 mit einer Funkeinrichtung 10, einer Mikroprozessoreinrichtung 20 und einem Interface 30. Die Funkeinrichtung 10 ist mit der Mikroprozessoreinrichtung 20 verbunden, die außerdem mit dem Interface 30 in Verbindung steht. Das Interface 30 weist Anschlusspins S1, S2, ..., S8 auf, mit denen das Funkmodul 5 an externe elektrische Vorrichtungen angeschlossen werden kann.

In der Darstellung gemäß der Figur 1 wird das Funkmodul 5 als Modem betrieben, also in einer passiven Betriebsart. Hierfür ist an das Interface 30 des Funkmoduls 5 ein externer Computer 50 angeschlossen. Die elektrische Verbindung zwischen dem Interface 30 und dem externen Computer 50 wird durch eine Teilgruppe 60 der Anschlusspins gewährleistet, nämlich durch die Anschlusspins S1, S2, S3 und S4. Über diese Teilgruppe 60 werden sog. AT-Kommandos zwischen dem Funkmodul 5 und dem externen Computer 50 ausgetauscht, um das Funkmodul 5 als Modem zu betreiben.

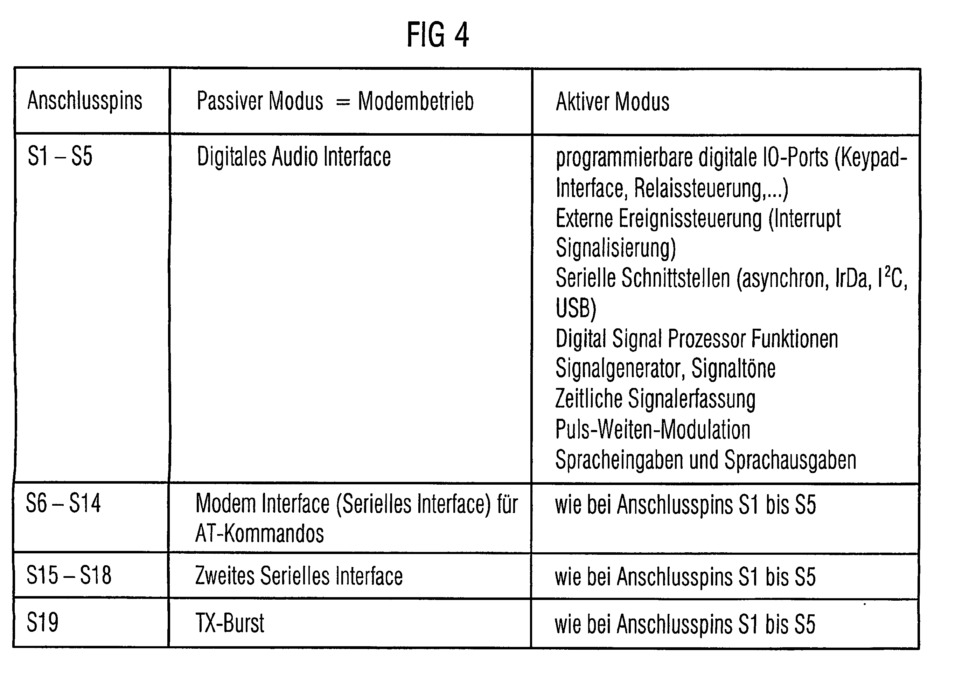

In der Figur 1 sind für die Verbindung zwischen dem externen Computer 50 und dem Funkmodul 5 - aus Gründen der Übersichtlichkeit - lediglich vier Anschlusspins (S1 bis S4) dargestellt; es sei darauf hingewiesen, dass die Anzahl der Anschlusspins quasi beliebig ist und lediglich von der konkreten technischen Ausgestaltung der Daten-Verbindung zwischen dem Funkmodul 5 und dem externen Computer 50 abhängt. Beispielsweise kann die Anzahl der Anschlusspins für die Modem-Verbindung auch neun betragen (vgl. beispielsweise die Erläuterungen zur-Figur 4).

Die Figur 2 zeigt das Funkmodul 5 gemäß der Figur 1 in einer aktiven Betriebsart; konkret wird das Funkmodul 5 in der Darstellung gemäß der Figur 2 in einem Kommunikationsendgerät betrieben. Hierfür sind an die Anschlusspins S1 bis S8 des Interfaces 30 ein Lautsprecher 100 als Aktor, ein Mikrofon 110 als Sensor, eine Displayeinrichtung 120 und eine Wähltastatur 130 angeschlossen.

Man erkennt in den Figuren 1 und 2, dass die Anschlusspins S1 bis S4 doppelt Verwendung finden; denn sie werden im Modem-Betrieb - gemäß der Figur 1 - zur Übertragung von AT-Kommandos verwendet und sie dienen - gemäß der Figur 2 - außerdem zum Anschluss von Aktoren und Sensoren im Falle einer aktiven Betriebsart.

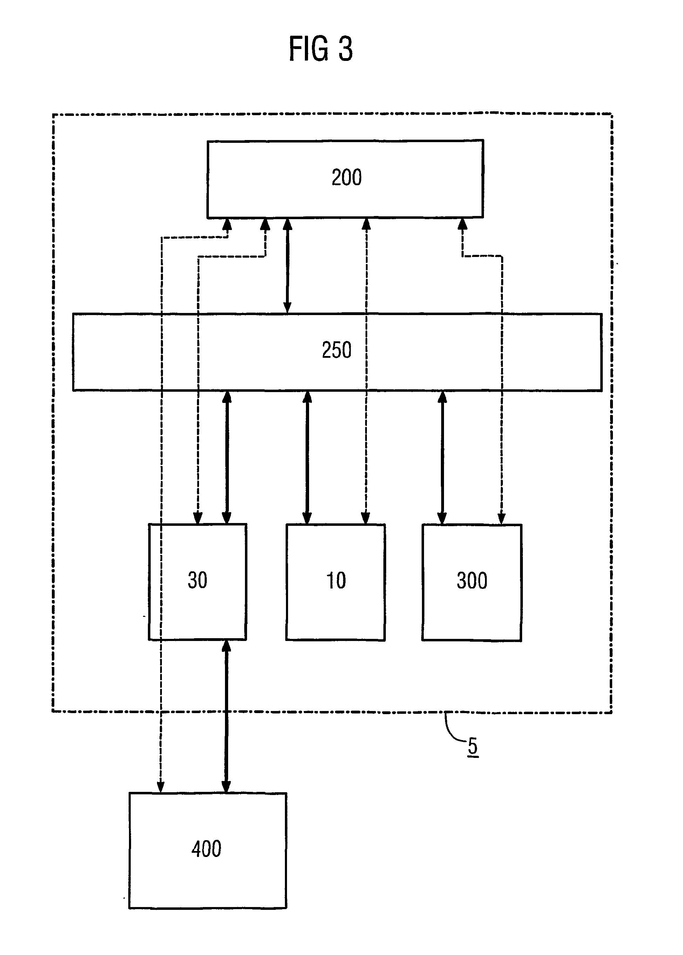

Die Figur 3 zeigt das Funkmodul 5 von der "Software-Seite" in schematischer Darstellung. Konkret erkennt man einen Block 200, der die Applikationssoftware des Funkmoduls 5 darstellt. Unter Applikationssoftware wird dabei diejenige Software verstanden, die ein Benutzer des Funkmoduls 5 implementieren kann. Die Applikationssoftware 200 steht mit dem Betriebssystem 250 des Funkmoduls 5 in Verbindung. Das Betriebssystem ist bei dem Ausführungsbeispiel gemäß der Figur 3 durch sog. Firmware gebildet, also fest vorprogrammierte Software, die benutzerseitig unveränderlich ist. Die Firmware kann in ROM-Bausteinen, beispielsweise in EPROM-Bausteinen implementiert sein.

Das Betriebssystem 250 steuert bei dem Ausführungsbeispiel gemäß der Figur 3 das Interface 30 als I/O-Einrichtung, die Funkeinrichtung 10 und einen Speicher 300 der Mikroprozessoreinrichtung 20; dies ist in der Figur 3 durch fette durchgezogene Doppelpfeile gekennzeichnet.

An das Interface 30 sind in der Darstellung gemäß der Figur 3 externe Geräte 400 angeschlossen.

Die Applikationssoftware 200 kann auf das Interface 30, die Funkeinrichtung 10 und den Speicher 300 niemals unmittelbar, sondern ausschließlich durch Vermittlung des Betriebssystems 250 zugreifen; dies ist in der Figur 3 durch dünne, gestrichelte Doppelpfeile dargestellt.

Durch das Betriebssystem 250 des Funkmoduls 5 wird somit festgelegt, wie die Anschlusspins S1 bis S8 des Interfaces 30 verwendet werden sollen. Hierzu sind in dem Betriebssystem verschiedene Konfigurationen - und zwar als Firmware - festgeschrieben, die festlegen, wann welche Anschlusspins des Interfaces 30 jeweils wie zu benutzen sind.

Wie die Belegung der Anschlusspins - beispielhaft -" konkret aussehen kann zeigt die Tabelle gemäß der Figur 4 anhand eines Ausführungsbeispiels für ein mit 19 Anschlusspins ausgestattetes Interface 30.

## Patentansprüche

1. Funkmodul (5) mit einer Funkeinrichtung (10), einer mit der Funkeinrichtung in Verbindung stehenden internen Mikroprozessoreinrichtung (20) und einem mit der Mikroprozessoreinrichtung in Verbindung stehenden Interface (30) mit Anschlusspins (S1, ..., S8) zum Anschluss des Funkmoduls an mindestens eine externe elektrische Vorrichtung (50, 100, 110, 120, 130), wobei das Funkmodul derart ausgestaltet ist, dass es mindestens zwei Betriebsarten aufweist, in der es betrieben werden kann, und zwar
- eine passive Betriebsart, bei der
- eine externe Mikroprozessoreinrichtung (50) als externe elektrische Vorrichtung an das Funkmodul angeschlossen ist,
- das Funkmodul als Modem für die externe Mikroprozessoreinrichtung dient und
- das Funkmodul über Modem-Ansteuersignale, vorzugsweise AT-Kommandos, von der externen Mikroprozessoreinrichtung ansteuerbar ist,
- und mindestens eine aktive Betriebsart, bei der
- mindestens ein Aktor (100) oder Sensor (110) als externe elektrische Vorrichtung an das Funkmodul angeschlossen ist,
- das Funkmodul den mindestens einen Aktor oder Sensor ansteuert und/oder ausliest und seinerseits über die Funkeinrichtung von externer Seite ansteuerbar ist, **dadurch gekennzeichnet, dass**
- die elektrische Belegung der Anschlusspins derart umkonfigurierbar ausgestaltet ist, dass die Mikroprozessoreinrichtung mindestens ein Anschlusspin (S1, S2, S3, S4) sowohl für die passive Betriebsart als auch für eine der aktiven Betriebsarten benutzt.

2. Funkmodul nach Anspruch 1,
**dadurch gekennzeichnet, dass**
- die Mikroprozessoreinrichtung mit mindestens zwei Softwareprogrammen (200, 250) programmiert ist, von denen
- ein Softwareprogramm (250) das Betriebssystem des Funkmoduls bildet, das die elektrische Belegung der Anschlusspins für jede der mindestens zwei Betriebsarten des Funkmoduls festlegt, und
- mindestens ein weiteres Softwareprogramm Applikationssoftware (200) bildet, die die jeweilige Betriebsart des Funkmoduls festlegt.

3. Funkmodul nach Anspruch 2,
**dadurch gekennzeichnet, dass**
- die Applikationssoftware benutzerseitig von außen veränderbar ist, wohingegen das Betriebssystem benutzerseitig unveränderbar ist.

4. Funkmodul nach Anspruch 3,
**dadurch gekennzeichnet, dass**
- das Betriebssystem (250) durch Firmware gebildet ist.

5. Funkmodul nach Anspruch 3 oder 4,
**dadurch gekennzeichnet, dass**
- die Applikationssoftware Interpreter-Software, vorzugsweise auf der Basis der Programmiersprachen Basic oder Java^{®} ist.

6. Funkmodul nach einem der vorangehenden Ansprüche,
**dadurch gekennzeichnet, dass**
- die Applikationssoftware und das Betriebssystem derart voneinander getrennt sind, dass
- die Ansteuerung der Funkeinrichtung und des Interfaces ausschließlich durch das Betriebssystem erfolgen kann und
- ein Zugriff der Applikationssoftware auf das Interface und die Funkeinrichtung ausschließlich unter Vermittlung und Kontrolle des Betriebssystems erfolgen kann und
- ein unmittelbarer Zugriff der Applikationssoftware auf das Interface und die Funkeinrichtung unterbunden ist.

7. Funkmodul nach einem der vorangehenden Ansprüche, **dadurch gekennzeichnet, dass**
- die passive Betriebsart vollständig in dem Betriebssystem hinterlegt ist.

## Claims

1. A radio module (5) having a radio device (10), an internal microprocessor device (20), which communicates with the radio device, and an interface (30), which communicates with the microprocessor device, with connection pins (S1, ..., S8) for connection of the radio module to at least one external electrical apparatus (50, 100, 110, 120, 130), wherein the radio module is designed in such a way that it has at least two operating modes in which it can be operated, that is,
- a passive operating mode, in which
- an external microprocessor device (50) is connected as an external electrical apparatus to the radio module,
- the radio module is used as a modem for the external microprocessor device, and
- the radio module can be activated by the external microprocessor device by way of modem-activation signals, preferably AT commands,
- and at least one active operating mode, in which
- at least one actuator (100) or sensor (110) is connected to the radio module as an external electrical apparatus,
- the radio module activates and/or reads the at least one actuator or sensor and can be activated for its part externally by way of the radio device,
**characterised in that**
- the electrical assignment of the connection pins is designed in a reconfigurable manner in such a way that the microprocessor device uses at least one connection pin (S1, S2, S3, S4) both for the passive operating mode and for one of the active operating modes.

2. A radio module according to claim 1,
**characterised in that**
- the microprocessor device is programmed with at least two software programs (200, 250) of which
- one software program (250) forms the operating system of the radio module which establishes the electrical assignment of the connection pins for each of the at least two operating modes of the radio module, and
- at least one further software program forms application software (200) which establishes the respective operating mode of the radio module.

3. A radio module according to claim 2,
**characterised in that**
- the application software can be changed from outside by a user, whereas the operating system cannot be changed by a user.

4. A radio module according to claim 3,
**characterised in that**
- the operating system (250) is formed by firmware.

5. A radio module according to claim 3 or 4,
**characterised in that**
- the application software is interpreter software, preferably based on the Basic or Java^{®} programming language.

6. A radio module according to one of the preceding claims,
**characterised in that**
- the application software and the operating system are separated from each other in such a way that
- the activation of the radio device and of the interface can be effected exclusively by the operating system, and
- access of the application software to the interface and the radio device can be effected exclusively with switching and control of the operating system, and
- direct access of the application software to the interface and the radio device is prevented.

7. A radio module according to one of the preceding claims,
**characterised in that**
- the passive operating mode is stored completely in the operating system.

## Revendications

1. Module (5) radio comprenant un dispositif (10) radio, un dispositif (20) de microprocesseur interne en liaison avec le dispositif radio et une interface (30) en : liaison avec le dispositif de microprocesseur et ayant des broches (S1, ..., S8) de borne pour le raccordement du module radio à au moins un dispositif (50, 100, 110, 120, 130) électrique extérieur, le module radio étant tel qu'il a au moins deux types de fonctionnement, dans lesquels il peut être mis en fonctionnement, à savoir
- un type d'exploitation passif, dans lequel
- un dispositif (50) de microprocesseur extérieur est raccordé en tant que dispositif électrique extérieur au module radio,
- le module radio sert de modem pour le dispositif de microprocesseur extérieur et
- le module radio peut être commandé par des signaux de commande de modem, de préférence des instructions AT, par le dispositif de microprocesseur extérieur,
- et au moins un type d'exploitation actif, dans lequel
- au moins un actionneur (100) ou un capteur (110) est raccordé en tant que dispositif électrique extérieur au module radio,
- le module radio commende et/ou lit le au moins un actionneur ou capteur et, de son côté, peut être commandé du côté extérieur par le dispositif radio,
**caractérisé en ce que**
- l'occupation électrique des broches de borne est reconfigurable, de manière à ce que le dispositif de microprocesseur utilise au moins une broche (S1, S2, S3, S4) de borne à la fois pour le type d'exploitation passif et pour l'un des types ce fonctionnement actif.

2. Module radio suivant la revendication 1
**caractérisé en ce que**
- le dispositif de microprocesseur est programmé par au moins deux programmes (200, 250) de logiciel, dont
- un programme (250) de logiciel forme le système d'exploitation du module radio, qui fixe l'occupation électrique des broches de borne pour chacun des au moins deux types de fonctionnement du module radio,
- au moins un autre programme de logiciel forme un logiciel (200) d'application, qui fixe le type d'exploitation respective du module radio.

3. Module radio suivant la revendication 2,
**caractérisé en ce que**
- le logiciel d'application peut être modifié de l'extérieur du côté de l'utilisateur tandis que le système d'exploitation ne peut pas être modifié du côté de l'utilisateur.

4. Module radio suivant la revendication 3,
**caractérisé en ce que**
- le système (250) de fonctionnement est formé par microprogrammation.

5. Module radio suivant la revendication 3 ou 4,
**caractérisé en ce que**
- le logiciel d'application est un logiciel interpréteur, de préférence sur la base du langage de programmation basic ou java (marque de fabrique).

6. Module radio suivant l'une des revendications précédentes, **caractérisé en ce que**
- le logiciel d'application et le système d'exploitation sont séparés l'un de l'autre, de manière à ce que
- la commande du dispositif radio et de l'interface puisse s'effectuer exclusivement par le système d'exploitation et
- un accès du logiciel d'application à l'interface et au dispositif radio puisse s'effectuer exclusivement par l'intermédiaire et sous le contrôlé du système d'exploitation et
- un accès direct du logiciel d'application à l'interface et au dispositif radio soit interdit.

7. Module radio suivant l'une des revendications précédentes, **caractérisé en ce que**
- le type d'exploitation passif est mémorisé complètement dans le système d'exploitation.
